# EUROPEAN PATENT SPECIFICATION

(11) **EP 3 256 406 B1**
(45) Date of publication and mention of the grant of the patent: **25.01.2023**
(21) Application number: 16706549.9
(22) Date of filing: 09.02.2016
(51) Int. Cl.: B65G 1/137, G06Q 10/08

(54) **A PALLETIZING SYSTEM AND A METHOD OF OPERATING SUCH A PALLETIZING SYSTEM**
PALLETIERSYSTEM UND VERFAHREN ZUM BETREIBEN EINES SOLCHEN PALLETIERSYSTEMS
SYSTÈME DE PALETTISATION ET PROCÉDÉ PERMETTANT DE FAIRE FONCTIONNER UN TEL SYSTÈME

(30) Priority: 10.02.2015 EP 15154491
(43) Date of publication of application: 20.12.2017
(73) Proprietor: Marel A/S, 8200 Aarhus N (DK)
(72) Inventor: MIKKELSEN, Tommy Noerskov, 8860 Ulstrup (DK)
(74) Representative: Inspicos P/S
(86) International application number: PCT/EP2016/052717
(87) International publication number: WO 2016/128394

(56) References cited:
- WO-A2-2014/009257
- US-A- 4 692 876
- US-A1- 2008 046 108
- US-A1- 2008 046 116
- Viastore Systems Gmbh: "Système de flux de matériaux viad@tMFC | viastore", , 2 August 2013 (2013-08-02), XP055205849, Retrieved from the Internet: URL:http://www.viastore.fr/systeme-de-gest ion-dentrepot-wms/systeme-de-flux-de-mater iaux-viadat-mfc/ [retrieved on 2015-08-03]

## Description

### FIELD OF THE INVENTION

The present invention relates to a palletizing system and to a method of operating such a palletizing system.

### BACKGROUND OF THE INVENTION

Palletizing systems facilitated to load containers containing food products onto a pallet have served for many years, because manual loading causes high labor cost and risk of workplace injury. Such labor saving systems have developed over the years from simple palletizer devices to automatic robotic driven solutions where a robot arm can load containers to a number of pallet positions in the proximity of the robot. Containers transported on a conveyor system are automatically distributed to one of perhaps multiple robots comprising the palletizing system. Even most recent systems are characterized by the need of operator assistance to configure the system on which pallet position on which robot each type of container containing different food products is palletized. Changes in customer orders and raw material being processed require continuous re-configuration of the system to adapt to the actual stream of containers to be palletized, and such manual adjustment makes the systems inefficient. With increasing demands within the food industry to produce and ship food faster and more flexible, the current palletizing systems within the overall plant logistics have reached their limits. US 2008/046116 A1 discloses a palletizing system according to the preamble of claim 1.

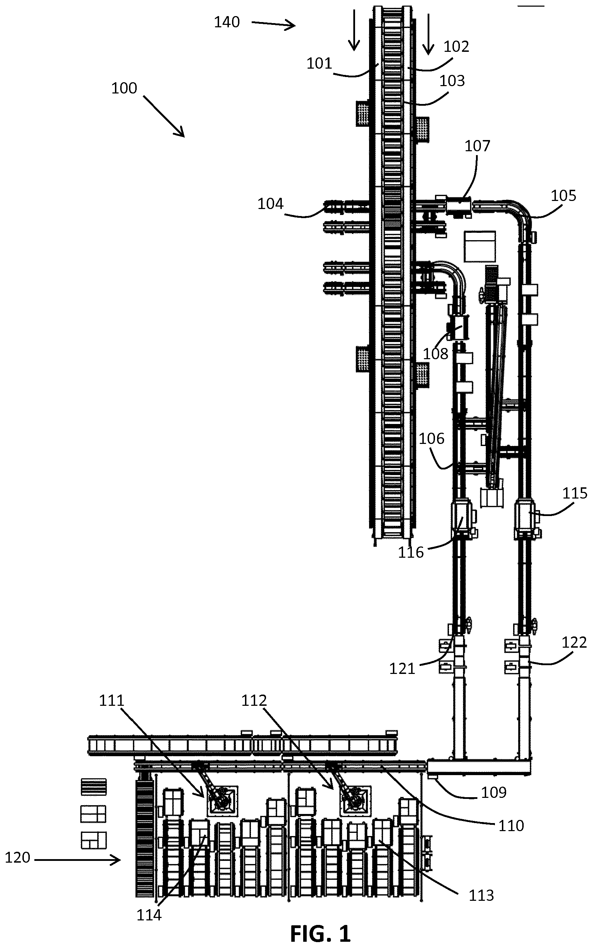

Figure 1 shows a prior art palletizing system for placing containers containing food products onto pallets. In this specific example, the palletizing system 100 shown here is utilized for placing containers containing salmon of e.g. different weight and/or quality onto pallets 113, 114 within pallet storage 120.

The incoming food items are previously sorted by quality and weighed by a weighing device (not shown) and fed into the system at the in-feed area 140 into a grader containing two parallel distribution conveyors 101, 102, and where via sweep arms (not shown) the food items are diverted to plurality of compartments or bins 103, where plurality of batches are created. The batches are subsequently put into empty containers that are fed by in-feed conveyor 104, where the containers are uniquely identified with container identifiers, i.e. any type of identification means that uniquely identify the containers.

The customer orders could e.g. include number of containers fulfilling one or more targets, e.g. fixed weight and/or quality and/or number of salmon in the containers.

Plurality of containers containing the food items are subsequently conveyed on two separate conveyors 105, 106, where at stations 107, 108 information about the food items in the containers is acquired, e.g. the weight, and where the containers are further scanned to identify the ID of the container. The unique ID number of the containers is subsequently associated to the acquired data on the content inside the container and stored.

Two ice-devices 115, 116 are also shown for putting ice in an amount according to customer order into the containers and subsequently the individual boxes strapped at strapping stations 121, 122.

The palletizing is performed by robotic systems 111, 112 where the assigned pallet places for each robotic system for each food product are pre-determined manually by an operator. As an example, robotic system 111 could be assigned pallets for customer order line A and B, whereas robotic system 112 is assigned pallets for customer order line C, D and E. This assignment is figured out by an operator and the control system is manually configured, e.g. once or several times a day. Thus, when the assignment of the pallet places is to be changed because of shifting customer orders or food items, the palletizing system must be reconfigured manually accordantly.

This prior art solution has several drawbacks, such as in particular limited capacity in consequence of lack of ability to dynamically alter pallet position allocation to accommodate changes to order lines, changes to priority requirements, or variable input quantities of various types of products. Also, prior art systems suffer from drawbacks occurring in consequence of failures in one of the robotic systems, potentially leading to a slow-down or even complete system interruption, causing a need for correction of pallet position allocation. This is obviously both time demanding and requires more manual labour. Also, it can easily occur that the manual assignment of the pallet places does not match to the actual flow of food items and customer orders arriving at the palletizing area. This will obviously heavily influence the practical capacity of the palletizing system and increase the overall costs.

### SUMMARY OF THE INVENTION

On the above background it is an object of embodiments of the present invention to provide an improved palletizing system that has higher capacity and requires less manual labour.

Embodiments of the invention preferably seeks to mitigate, alleviate or eliminate one or more of the above mentioned disadvantages singly or in any combination.

In particular, it may be seen as an object of embodiments of the present invention to palletizing system that solves the above mentioned problems, or other problems, of the prior art.

To address one or more of these concerns, in a first aspect of the invention a palletizing system is provided, comprising:
- a pallet storage for accommodating a plurality of pallets at fixed positions,
- at least one robotic system in the proximity of the fixed positions,
- conveying means for conveying a flow of containers to the at least one robotic system, each container containing a plurality of food items;
- a control system;
- means for storing in the control system of the palletizing system a list of container identifiers and in respect of each container identifier an order line identifier of the container, wherein the order line identifier of each respective container preferably defines a customer order, to which the container is assigned within the control system;
- means for defining, in the control system, a plurality of types of containers, wherein all of the containers of each type of containers share one or more common characteristics of the food items contained in the containers;
- a flow rate determining means for determining respective flow rates of the plurality of types of containers on the conveyor means;
- an identifier accessing means for determining the container identifier of each container upstream of the at least one robot system; and subsequently:
   the control system further being configured to:
   o determining on the basis of the list of container identifiers and associated order line identifiers stored in the control system the order line associated with each container;
   o determining the type of each container and the associated flow rate of that type of container;
   o determining one single of the pallet positions to which each of the containers is to be allocated, wherein a selection of the pallet position for each container among the plurality of pallet positions is made on the basis of the order line identifier of the container and the associated flow rate;
   o instructing the at least one robotic system to arrange each container at the determined pallet position.

Each robotic system thus preferably includes a plurality of pallet positions. The containers optionally enter the conveying means from a single or common source of containers at an in-feed area of the palletizing system.

Accordingly, a dynamic allocation is provided where the system automatically allocates the pallet positions based on the flow rate of the plurality of types of containers on the conveyor means and the order line identifier. This eliminates that manual labour of adjusting the pallet positions manually and more importantly greatly increases the throughput of the palletizing system.

The term flow rate may according to the present invention be understood as the number of containers that are in the system per unit time sharing one or more common characteristics of the food items contained in the containers.

As an example, the order line identifiers indicate the order for customer(s), e.g. one (or more) customer order comprising 500 containers (order A) of high-quality salmon fish between 3-4 kg where each container has a target weight of 10kg, another order (order B) could be 50 containers of 2-3kg medium quality salmon where the target weight of the boxes is 14kg and a third order (order C) could be 150 containers of high-quality salmon fish between 3-4 kg where each container has a target weight of 20kg. Thus, the number of containers of order A per unit time (number/minute) gives the flow rate of that type of containers, same applies for order B and C.

By utilizing the flow rate and the order line identifier it is possible to dynamically allocate containers to the pallet positions. In one example, the robotic system is operable by means of the control system to compare the flow rates of the plurality of types of containers and the capacity of each available pallet position for a particular order line. The capacity of each order line may, e.g., be defined as the number of containers in general, or more specifically the number of containers of each type of containers, which can be accommodated per unit of time at the pallet position. The capacity of the pallet positions may vary over time and may dependent upon, e.g., its physical distance to the robotic system, or its physical dimensions. The robotic system may thus be operable by means of the control system to allocate containers to pallet positions in accordance with the capacity of the individual pallet positions. Typically, each pallet position is assigned to one single order line during production of the order. Each order line may occupy a plurality of pallet positions during production of the order. The control system may thus be able to determine, on the basis of the order line identifier of each container, the possible pallet positions of each container, and to correlate the flow rate of the container's type to the capacity of each of the pallet positions so as to thereby determine to which one of the possible pallet positions the container is to be allocated. For example, types of containers fed at a high flow rate may be preferentially allocated to pallet positions operated at a high capacity, whereas types of containers fed at a low flow rate are preferentially allocated to pallet positions operated at a low capacity. In another example, the step of determining the one single pallet position to which each individual container is to be allocated may include the steps of:
- estimating, before the pallet position is allocated, a number of pallet positions required at the at least one robotic system for containers of a particular type; the step of estimating may include the step of multiplying a current flow rate of each type of containers by a predetermined or variable time interval, or any other adequate procedure for obtaining an estimated number of containers of the particular type which will be conveyed to the robotic system within a future time interval; and
- reserving the estimated number of pallet positions at the robotic system for accommodation of the number of containers of the particular type to arrive at the at least one robotic system.

If as an example a specific order, e.g. order A discussed above, includes a high number of containers of a particular type and the flow rote of this type of containers (i.e. salmon fish between 3-4 kg with 10kg target) is relatively high, the palletizing system will adapt the pallet positions accordingly, e.g. by reserving 3 (more or less) pallet positions at the one or more robotic systems. If on the other hand the flow rate for order A would be much lower (e.g. distributed over 20 hours instead of 2 hours), there might be no need to reserve such three pallet positions, instead only one pallet position at a time might be sufficient.

In one embodiment, the conveying means comprises a closed-loop conveyor and where the at least one robotic system is positioned along the closed-loop conveyor. In such embodiment, the control system may preferably further be configured to determine whether or not to recirculate the container on the closed-loop conveyor. This may be of a particular advantage where e.g. a given container does not fit into any of the pallet positions. Thus, instead of e.g. manually removing the container and run it back into system or instead of buffering containers up during order production, it will simply be recirculated until a suitable pallet position is found.

Another scenario may be where the order is e.g. one pallet of product F (e.g. 17 containers of particular type of product), and where the flow rate of this particular product type is too high for the capacity of the robotic system, i.e. the time the robotic system needs to take a container and move back to the same position is too long. Thus, in such a case, the container may simply be recirculated into the system.

In one embodiment, the identifier accessing means for determining the container identifier of each container upstream of the at least one robot system is positioned at an entrance of the closed-loop conveyor.

In one embodiment, the control system is further configured to utilize information about the capacity of the at least one robotic system in determining the pallet positions to which each of the containers is to be allocated and utilize the associated flow rate of that type of containers and the capacity of the at least one robotic system in determining whether or not to recirculate the container on the closed-loop conveyor.

The palletizing system of the present invention may comprise one robotic system or a plurality of robotic systems. In case of plurality of robotic systems, each of the robotic systems may preferably be arranged along the conveying means, such as along a closed-loop conveyor of the conveying means. The one single robotic system or, in case of a plurality of robotic systems, each of the robotic systems preferably comprises a plurality of pallet positions. In order to transfer containers from the conveying means to the robotic systems, the palletizing system preferably comprises take-out means, such as cross-belts, sweeper arms or the like, at each robotic system. The take-out means may be utilized to take containers out from the conveying means, so that containers may subsequently be allocated to a pallet position of the robotic system, or, in the case of multiple robotic systems, to a pallet position of one of the robotic systems. The control system may be configured to determine the pallet position for the containers each time a container approaches any one of the take-out means. Alternatively, the control system may be configured to overrule a previously determined pallet position, whereby a possible overrule decision may be taken by the control system each time a container approaches any one of the take-out means. Thus, pallet position determination may be performed on-the-fly, so that allocation of pallet positions may be swiftly adapted to changes or order lines, malfunction of the robotic means, priority requirements, etc.

In one embodiment, the palletizing system further comprises a label printer and an applicator stationed in proximity to each of the at least one robotic system for printing labels with food related information and attaching the labels to the containers prior to arranging each container at the determined pallet position. Accordingly, in wet environment like in the salmon industry there is always the risk that by labelling the containers too early in the process the labels may easily fall off the containers. Thus, by doing this printing just before the containers are being placed onto the pallets it is more likely that the containers have dried which obviously reduces this risk significantly. Also, the system will be able to detect if a container is missing, i.e. if a container should be at a given robotic system, but no box is detected there, the system will be able to detect that something has happened and react accordingly.

In one embodiment, the flow rate determining means is operably connected to a receiving area of the palletizing system, where the receiving area comprises weight determining means for determining the weight of individual incoming food items or food item batches prior to arranging the food item batches into the containers, where the flow rate determining means includes a processor for processing the weight data from the weight determining means for determining or estimating the respective flow rates. Accordingly, the palletizing system is capable to plan the palletizing process very early in time, since e.g. customer orders are typically already stored in the system.

In one embodiment, the palletizing system further comprises a weighing means positioned upstream in relation to the identifier accessing means for weighing the containers and the plurality of food items in the containers, where the control system is further configured to utilize the weighing data in determining the respective flow rates of the plurality of types of containers. It is thus possible to accurately determine the exact weight of the containers, i.e. the container itself, and the weight of the food items in the containers.

In one embodiment, the control system is configured to control the at least one robotic system in placing plurality containers sharing one or more common characteristics of the food items contained in the containers at two or more different pallet positions. As already addressed, this may be the scenario where the flow rate is high and also the customer's order, but by e.g. already knowing that more than one pallet is needed and for such a high flow rate, the system automatically assigns another pallet position for this particular type of food item (e.g. the order A discussed above). This may also be relevant where the capacity of the robotic system is not sufficient to keep up with the flow rate, and where thus at least once second pallet position is assigned for this particular product type.

In a second aspect, the present invention provides a method according to the subject-matter of claim 9.

The common characteristics may as an example be, but is not limited to, the weight, the quality, the colour, the size, the shape etc.

Accordingly, a highly advanced method is provided for fully automatically operating the palletizing process where manual intervention is greatly reduced or even eliminated.

Also, the assignment of the pallet positions may e.g. include, for large orders for a client and for products having high production rate, that the method may instructs the system to choose those pallet positions that are closest to the robotic system(s) so as to enhance the capacity of the robotic system(s), but it is obvious that the robotic system(s) will have less capacity if it is placing the containers at further back (away) pallet positions compared to the closest most pallet positions.

In one embodiment, the step of determining one single of the pallet positions is assigned to plurality of pallet positions of a specific robotic system selected from the at least one robotic system.

In one embodiment, prior to determining one single of the pallet positions to which each of the containers is to be allocated, information about the current available capacity at the pallet positioned is provided and where the current available capacity information is used as input data in determining the one single of the pallet positions. Accordingly, the method and the system is capable of responding to if some pallet positions are available or not and adapt the palletizing process accordingly.

In one embodiment, the method further comprises by-passing a container selected from the plurality of containers to manual handling. This may e.g. be preferred if a container is damaged or if a customer's order is very low (e.g. 5 containers).

In one embodiment, the pallet position selection may be made on the basis of a preselection; for example three pallets may be pre-designated to a specific order line, and all containers of that order line go to these three pallet positions all day long.

The present invention also provides a method for operating a palletizing system, the palletizing system comprising
- at least one robotic system,
- a plurality of pallet positions in the vicinity of the at least one robotic system, and
- a conveyor means;
the method comprising:
providing a flow a containers at the conveyor means, each container containing a plurality of food items, and each container being destined for one of a plurality of orders;
storing in a control system of the palletizing system a list of container identifiers and in respect of each container identifier order details of the order to which the container is destined, such as one or more of: an order line identifier, a number of containers in the same order or in the same order line, a number of containers with the same kind of food items, a container final destination identifier indicating which containers are allowed to go on the same pallet, etc;
defining a plurality of sorts of containers, wherein all of the containers of each sort of containers share one or more common order details;
determining
   - a flow rate of each of the plurality of sorts of containers at the conveyor means;
   - the container identifier of each container upstream of the at least one robot system and deriving the associated sort of container;
and subsequently determining one or more pallet positions to which each of the containers is to be allocated, on the basis of
   - the sort of the container and
   - the flow rate of that sort of container at the conveyor means;
arranging each container at the determined pallet position by means of the at least one robotic system.

The respective flow rates of the plurality of sorts (herein referred to also as "types") of containers on the conveyor means may be determined utilizing at least one piece of information captured at the filling location of the containers or at the conveyor means upstream to the point of determination of the container identifier of each container. For example, the flow rates of the plurality of sorts of containers may be determined at a weighing station at or upstream of a filing/packaging station.

The step of determining the one more pallet positions, to which each of the containers is to be allocated may include determining a distance to be travelled by the robotic system when arranging the container in question at the one or more positions, and basing the determination of the one or more positions on the basis of said distance. In other words, the distance to be travelled by the robotic system from the conveyor means to the pallet position in respect of the container may influence the choice of pallet position.

In one embodiment, determination of the container identifier of each of the containers upstream of the at least one robotic system may be performed by tracking each container from the moments its identifier is entered in the list of container identifiers in the control system.

A buffer conveyor may be provided in association with the conveyor means. A track change for the flow of containers may be provided in order to divert containers from the conveyor means onto the buffer conveyor upstream of the at least one robotic system. The control system may be configured to control the track change in order to control whether or not each container should be allowed to continue to the robotic system, or whether the container should rather be diverted onto the buffer conveyor.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1 shows one example of a prior art palletizing system,
figure 2 depicts a first embodiment of a palletizing system according to the present invention,
Figure 3 shows another way of creating containers of e.g. fish such as salmon as discussed in relation to figure 2 until the icing and strapping,
Figure 4 shows a second embodiment of a palletizing system according to the present invention;
Figure 5 shows a third embodiment of a palletizing system according to the present invention;
Figure 6 shows a flow-chart illustrating the method according to the second aspect of the invention.

### DESCRIPTION OF EMBODIMENTS

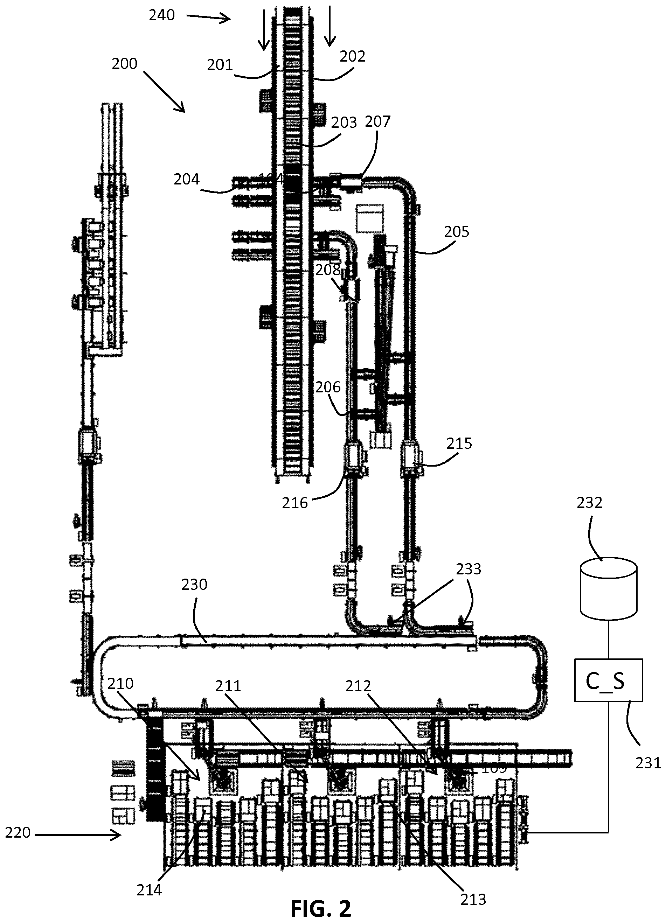

Figure 2 shows one embodiment of a palletizing system 200 according to the present invention for automatically placing containers containing food products onto pallets 213, 214. In this embodiment, the palletizing system may be used for placing containers containing salmon of e.g. different weight and/or quality onto pallets 213, 214, within pallet storage 220 accommodating a plurality of pallets 213, 214 at fixed positions and where at least one robotic system is arranged in the proximity of the fixed positions.

In this embodiment, the palletizing system further includes an in-feed area 240 where incoming food items are weighed by a weighing device (not shown) and fed into a grader containing e.g. two parallel distribution conveyors 201, 202.

Via sweep arms or similar means (not shown) the food items are diverted from the distribution conveyors 201, 202 to plurality of compartments or bins 203, where plurality of batches are created. The batches are subsequently put into empty containers that are fed by in-feed conveyor 204, where the containers are uniquely identified with container identifiers, i.e. any type of identification means that uniquely identify the containers.

The uniquely identified empty containers are associated with customer orders, e.g. container ID 123 is associated to customer order F. The step of advancing the containers to the position where the batches are released into the containers is preferably fully automatized e.g. via tracking the position of the containers and the batches such that correct batches are placed into the correct empty containers. An example of a customer orders could e.g. include target weight and/or quality and/or number of food items etc. Furthermore, the customer orders could include the number of containers fulfilling the criteria, e.g. 500 containers of food product A, e.g. 20kg batches of high quality salmon.

Plurality of containers containing the food items are subsequently conveyed on a conveying means, e.g. two separate conveyors 205, 206, where at stations 207, 208 the containers are identified by e.g. a scanner, and where furthermore information about the food items characteristics in the containers is acquired, e.g. the weight in the containers. The container identifiers are subsequently associated to the acquired food items characteristics data inside the container and stored in e.g. a database 232.

Two ice-devices 215, 216 may also be provided putting ice into the containers, especially if the food products is fish, and subsequently the individual boxes may be strapped at strapping stations.

The present invention should however to be construed as being limited to such an in-feed area where batches are created and placed into the containers. The palletizing system according to the present invention could just as well receive pre-packed containers, where the above mentioned information are associated to the containers, i.e. the container identifier and the information about the food items in the containers.

Figures 2 further comprises at least one robotic system 210-212 in the proximity of the fixed positions of the plurality of pallets.

A closed-loop conveyor 230 is arranged at distal ends of the conveyors 205, 206 for receiving the containers and convey them along a closed-loop. As depicted here, the robotic systems are positioned along the closed-loop conveyor 230.

The palletizing system further comprises an identifier accessing means 233, e.g. a scanner, positioned between conveyors 205, 206 and the closed-loop conveyor 230 for determining the container identifier of each container upstream of the at least one robot system.

The palletizing system 200 further comprises a control system 232 configured to:
o determining on the basis of the list of container identifiers and associated order line identifiers, i.e. customer orders, stored in in the database 231 of the control system, the order line associated with each container, i.e. what customer order is behind this particular container;
o determining the type of each container, e.g. is it product type A, B or C that is in the container, and the associated flow rate of that type of container;
o determining one single of the pallet positions to which each of the containers is to be allocated, wherein a selection of the pallet position for each container among the plurality of pallet positions is made on the basis of the order line identifier of the container and the associated flow rate;
o instructing the at least one robotic system to arrange each container at the determined pallet position.

In one embodiment, the control system 231 is further configured to utilize information about the capacity of the at least one robotic system, i.e. the number of pick and place container per unit time, in determining the pallet positions to which each of the containers is to be allocated. Based on this, the control system 231 may utilize the associated flow rate of that type of containers and the capacity of the at least one robotic system in determining whether or not to recirculate the container on the closed-loop conveyor. If as an example a pallet position within the palletizing area associated to robotic system 211 has been assigned for a particular product type, e.g. container containing 20kg of food items of high quality, and the flow rate of this particular robot cannot keep up with this high production rate (e.g. all these containers are coming in sequence) then the system may recycle one or more of the boxes at give it another try.

Although not shown here, a label printer and an applicator may be stationed in proximity to each of the at least one robotic system for printing labels with food related information and attaching the labels to the containers prior to arranging each container at the determined pallet position.

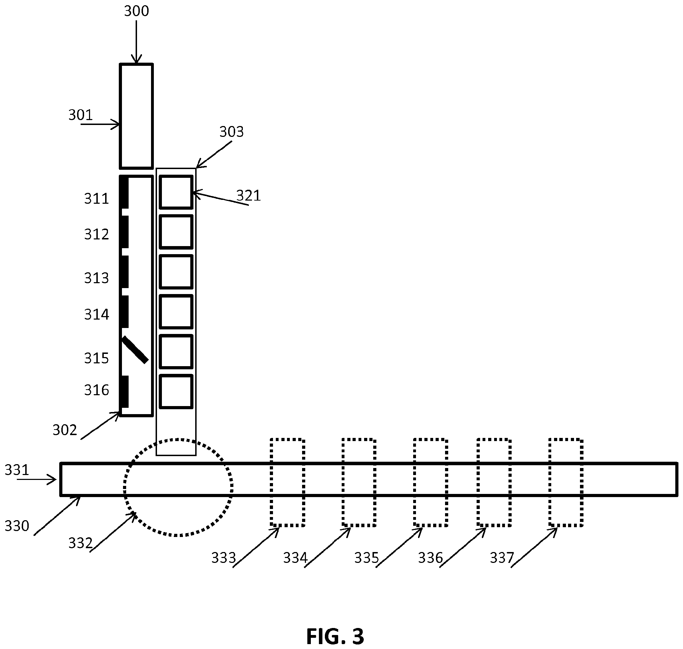

Figure 3 shows another way of creating containers of e.g. fish such as salmon as discussed in relation to figure 2 until the icing and strapping.

Food products are coming one by one at 300, which may e.g. be an in-feed conveyor, where they are weighed at the weighing station 301 while they are conveyed and continue onto the separator 302 where they are taken off the conveyor one at a time by one of the turnable rejecter arms 311 to 316 (315 is shown in the turned reject position). At the side of the separator a bin is arranged for each rejecter arm (e.g. 321 next to rejecter arm 311). Here a batch of items is collected. Each bin is equipped with a bottom gate such that when the batch is complete it is discharged onto a takeaway conveyor 301 which takes the batch to the loading station 332.

An empty container (of a type according to the specifications for that particular batch), is entering the conveyor 330 from 331 and the batch is loaded into the container at the loading station 332 as already described.

The container continues to 333 where it is weighed, to 334 where it is labelled with all relevant data for the customer, to 335 where ice is put into the container, to 336 where the lid is put on the container and to 337 where it is strapped.

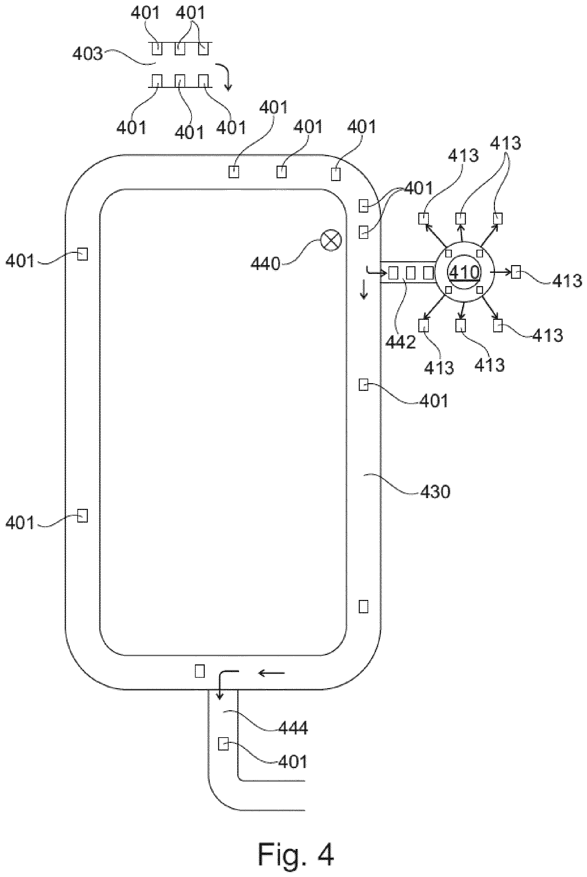

In the embodiment of the palletizing system shown in Figure 4, containers 401 are supplied to a conveying means comprising a closed-loop conveyor 430, from a common or single source of in-feed area 403. The system comprises a single robotic system 410 to which the closed-loop conveyor 430 connects by means of a connecting conveyor 442. The robotic system allocates containers 401 to a plurality of pallet positions 413. Once the types of the containers 401 and the associated flow rates have been determined by means not shown in Figure 4, and the container identifier of each container 401 has been determined, a take-out controller 440 is operated by the control system of the palletizing system to make a final decision as to whether or not each container 401 is to be taken out to the robotic system 410.

The take-out controller may thus be controlled by the control system to determine a respective one of the pallet positions 413 for the containers 401 each time a container 401 approaches the take-out controller 440. Alternatively, the control system may be configured to cause the take-out controller overrule a previously determined pallet position 413, whereby a possible overrule decision may be taken by the control system each time a container 401 approaches the take-out controller 440. Thus, pallet position determination may be performed on-the-fly, so that allocation of pallet positions may be swiftly adapted to changes or order lines, malfunction of the robotic means, priority requirements, etc.

Containers 401 which are not taken out for palletizing at the robotic system 401 may be recirculated at the closed-loop conveyor, or they may be taken out at discharge conveyor 444 for manual palletizing or other processing.

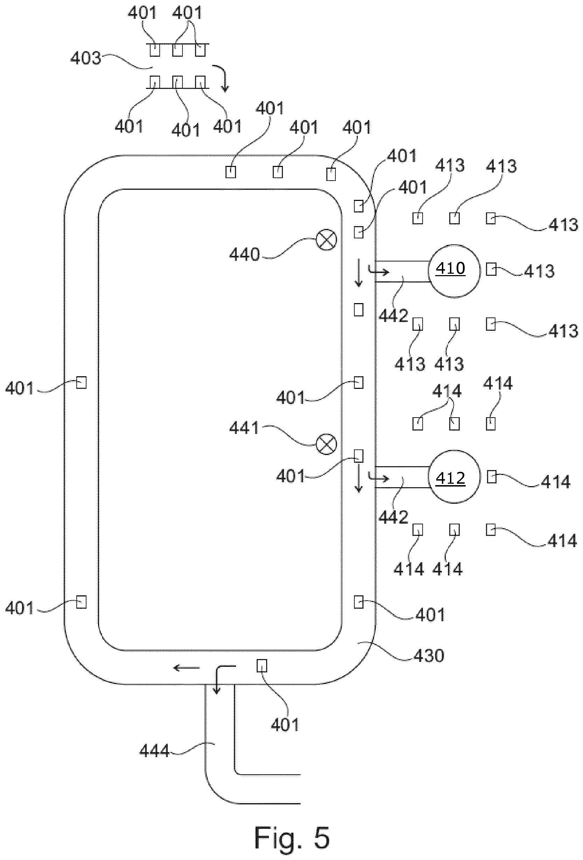

Figure 5 illustrates an embodiment similar to that of Figure 4, but with two robotic systems 410, 412 arranged along the closed-loop conveyor 430. Like the embodiment of Figure 4, the embodiment of Figure 5 comprises a common or single source of in-feed area 403 for the containers 401. The closed-loop conveyor 430 connects to the robotic systems 401, 412 by means of respective connecting conveyors 442, 443. Each of the robotic systems 410, 412 allocate containers 401 to a plurality of pallet positions 413 and 414, respectively. Once the types of the containers 401 and the associated flow rates have been determined by means not shown in Figure 4, and the container identifier of each container 401 has been determined, take-out controllers 440 and 441 are operated by the control system of the palletizing system to make a final decision as to whether or not each container 401 is to be taken out to any one of the robotic systems 410 and 412.

The take-out controllers 440, 441 may thus be controlled by the control system to determine a respective one of the pallet positions 413 and 414 for the containers 401 each time a container 401 approaches any one of the take-out controllers 440 and 441. Alternatively, the control system may be configured to cause any one of the take-out controllers 440, 441 overrule a previously determined pallet position 413, 414, whereby a possible overrule decision may be taken by the control system each time a container 401 approaches one of the take-out controllers 440, 441. Thus, pallet position determination may be performed on-the-fly, so that allocation of pallet positions may be swiftly adapted to changes or order lines, malfunction of the robotic means, priority requirements, etc.

Like in the embodiment of Figure 4, containers 401 which are not taken out for palletizing at the robotic system 401 may be recirculated at the closed-loop conveyor, or they may be taken out at discharge conveyor 444 for manual palletizing or other processing.

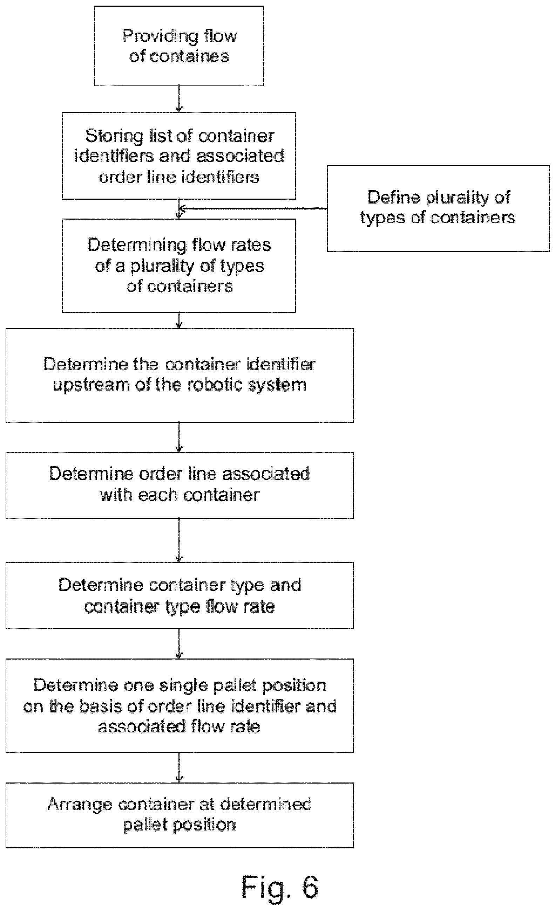

Figure 6 includes a flow-chart illustrating the method according to the second aspect of the invention, performed in a palletizing system according to the first aspect of the invention.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art without departing from the scope of the claims, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A palletizing system (200), comprising:
• a pallet storage (220) for accommodating a plurality of pallets (213, 214, 413, 414) at fixed positions,
• at least one robotic system (210-212; 410;412) in the proximity of the fixed positions,
• conveying means (205, 206, 230, 430) for conveying a flow of containers to the at least one robotic system (210-212; 410; 412), each container containing a plurality of food items;
• a control system (231);
• means for storing (232) in the control system (231) of the palletizing system a list of container identifiers and in respect of each container identifier an order line identifier of the container, wherein the order line identifier of each respective container defines a customer order, to which the container is assigned within the control system;
• means for defining, in the control system, a plurality of types of containers, wherein all of the containers of each type of containers share one or more common characteristics of the food items contained in the containers;
• an identifier accessing means (233) for determining the container identifier of each container upstream of the at least one robot system;
the control system (231) further being configured to:
determine on the basis of the list of container identifiers and associated order line identifiers stored in the control system the order line associated with each container;
instruct the at least one robotic system to arrange each container at the determined pallet position;
**characterized in that** the palletizing system (200) further comprises:
• a flow rate determining means (231) for determining respective flow rates of the plurality of types of containers on the conveyor means;
and wherein the control system (231) further being configured to:
o determine the type of each container and the associated flow rate of that type of container;
o determine one single of the pallet positions to which each of the containers is to be allocated, wherein a selection of the pallet position for each container among the plurality of pallet positions is made on the basis of the order line identifier of the container and the associated flow rate.

2. The palletizing system according to claim 1, wherein the conveying means (205, 206, 230, 430) comprises a closed-loop conveyor (230) and where the at least one robotic system (210, 212, 410, 412) is positioned along the closed-loop conveyor, where the control system (231) is further configured to determine whether or not to recirculate the container on the closed-loop conveyor.

3. The palletizing system according to claim 2, wherein the control system is further configured to utilize information about the capacity of the at least one robotic system (210, 212, 410, 412) in determining the pallet positions to which each of the containers is to be allocated and utilize the associated flow rate of that type of containers and the capacity of the at least one robotic system (210, 212, 410, 412) in determining whether or not to recirculate the container on the closed-loop conveyor (230).

4. The palletizing system according to claim 2, wherein the identifier accessing means (233) for determining the container identifier of each container upstream of the at least one robot system (210, 212, 410, 412) is positioned at an entrance of the closed-loop conveyor (230).

5. The palletizing system according to any of the preceding claims, further comprising a label printer and an applicator stationed in proximity to each of the at least one robotic system (210, 212, 410, 412) for printing labels with food related information and attaching the labels to the containers prior to arranging each container at the determined pallet position.

6. The palletizing system according to any of the preceding claims, wherein the flow rate determining means is operably connected to a receiving area of the palletizing system, where the receiving area (240) comprises weight determining means for determining the weight of individual incoming food items or food item batches prior to arranging the food item batches into the containers, where the flow rate determining means includes a processor for processing the weight data from the weight determining means for determining or estimating the respective flow rates.

7. The palletizing system according to any of the preceding claims, further comprising a weighing means positioned upstream in relation to the identifier accessing means for weighing the containers and the plurality of food items in the containers, where the control system is further configured to utilize the weighing data in determining the respective flow rates of the plurality of types of containers.

8. The palletizing system according to any of the preceding claims, wherein the control system (231) is configured to control the at least one robotic system in placing a plurality containers sharing one or more common characteristics of the food items contained in the containers at two or more different pallet positions.

9. A method for operating a palletizing system, the palletizing system comprising at least one robotic system (210, 212, 410, 412), a plurality of pallet positions in the vicinity of the at least one robotic system, a control system (231) and a conveyor means (205, 206, 230, 430); the method comprising:
- storing in the control system of the palletizing system a list of container identifiers and in respect of each container identifier an order line identifier of the container, wherein the order line identifier of each respective container defines a customer order, to which the container is assigned within the control system (231);
- defining a plurality of types of containers, wherein all of the containers of each type of containers share one or more common characteristics of the food items contained in the containers; the step of defining being carried out by means of the control system;
**characterized in that** the method further comprising the steps of:
- providing, at the conveyor means (205, 206, 230, 430), a flow of containers to the at least one robotic system, each container containing a plurality of food items;
- determining respective flow rates of the plurality of types of containers on the conveyor means; the flow rates of the types of containers being communicated to the control system;
- determining the container identifier of each container upstream of the at least one robot system; the container identifier of each container being communicated to the control system; and subsequently:
- determining on the basis of the list of container identifiers and associated order line identifiers stored in the control system the order line associated with each container; the step of defining being carried out by means of the control system;
- determining the type of each container and the associated flow rate of that type of container; the type and associated flow rate being communicated to the control system (231);
- determining, in the control system, one single of the pallet positions to which each of the containers is to be allocated, wherein a selection of the pallet position for each container among the plurality of pallet positions is made on the basis of the order line identifier of the container and the associated flow rate;
- arranging each container at the determined pallet position by means of the at least one robotic system (210, 212, 410, 412).

10. The method according to claim 9, wherein the step of determining one single of the pallet positions is assigned to plurality of pallet positions of a specific robotic system selected from the at least one robotic system (210, 212, 410, 412).

11. The method according to claim 9 or 10, wherein prior to determining one single of the pallet positions to which each of the containers is to be allocated, information about the current available capacity at the pallet positioned is provided and where the current available capacity information is used as input data in determining the one single of the pallet positions.

12. The method according to any of the claims 9-11, further comprising by-passing a container selected from the plurality of containers to manual handling.

## Patentansprüche

1. Palettiersystem (200), umfassend:
• einen Palettenspeicher (220) zur Aufnahme mehrerer Paletten (213, 214, 413, 414) an festen Positionen,
• wenigstens ein Robotersystem (210-212; 410; 412) in der Nähe der festen Positionen,
• Fördermittel (205, 206, 230, 430) zum Befördern eines Flusses von Behältern zu dem wenigstens einen Robotersystem (210-212; 410; 412), wobei jeder Behälter eine Vielzahl von Lebensmittelartikeln enthält;
• ein Steuersystem (231);
• Mittel zum Speichern (232) in dem Steuersystem (231) des Palettiersystems einer Liste von Behälterkennungen und in Bezug auf jede Behälterkennung einer Auftragszeilenkennung des Behälters, wobei die Auftragszeilenkennung jedes jeweiligen Behälters einen Kundenauftrag definiert, dem der Behälter innerhalb des Leitsystems zugeordnet ist;
• Mittel zum Definieren einer Vielzahl von Typen von Behältern in dem Steuersystem, wobei alle der Behälter jedes Behältertyps eine oder mehrere gemeinsame Eigenschaften der in den Behältern enthaltenen Lebensmittel aufweisen;
• ein Kennungszugriffsmittel (233) zum Bestimmen der Behälterkennung jedes Behälters stromaufwärts von dem wenigstens einen Robotersystem;
wobei das Steuersystem (231) ferner so konfiguriert ist, dass es:
auf der Grundlage der im Steuersystem gespeicherten Liste von Behälterkennungen und zugeordneten Auftragszeilenkennungen die jedem Behälter zugeordnete Auftragszeile bestimmt;
das wenigstens eine Robotersystem anweist, jeden Behälter an der bestimmten Palettenposition anzuordnen;
**dadurch gekennzeichnet, dass** das Palettiersystem (200) ferner umfasst:
• ein Durchsatzraten-Bestimmungsmittel (231) zum Bestimmen jeweiliger Durchsatzraten der Vielzahl von Typen von Behältern auf dem Fördermittel;
und wobei das Steuersystem (231) ferner konfiguriert ist zum:
o Bestimmen des Typs jedes Behälters und der damit verbundenen Durchsatzrate dieses Behältertyps;
o Bestimmen einer einzigen der Palettenpositionen, der jeder der Behälter zuzuordnen ist, wobei eine Auswahl der Palettenposition für jeden Behälter der Vielzahl von Palettenpositionen auf der Grundlage der Auftragszeilenkennung des Behälters und der zugehörigen Durchsatzrate erfolgt.

2. Palettiersystem nach Anspruch 1, wobei das Fördermittel (205, 206, 230, 430) einen geschlossenen Förderkreis (230) umfasst und wobei das wenigstens eine Robotersystem (210, 212, 410, 412) entlang dem geschlossenen Förderkreis positioniert ist, wobei das Steuersystem (231) ferner konfiguriert ist zu bestimmen, ob der Behälter auf dem geschlossenen Förderkreis erneut im Kreis geschickt wird oder nicht.

3. Palettiersystem nach Anspruch 2, wobei das Steuersystem ferner konfiguriert ist, Informationen über die Kapazität des wenigstens einen Robotersystems (210, 212, 410, 412) beim Bestimmen der Palettenpositionen, denen jeder der Behälter zugeordnet sein muss, zu nutzen und die zugehörige Durchsatzrate dieses Typs von Behältern und die Kapazität des wenigstens einen Robotersystems (210, 212, 410, 412) beim Bestimmen, ob der Behälter im geschlossenen Förderkreis (230) erneut im Kreis geschickt werden soll oder nicht.

4. Palettiersystem nach Anspruch 2, wobei das Kennungszugriffsmittel (233) für das Bestimmen der Behälterkennung jedes Behälters stromaufwärts von dem wenigstens einen Robotersystem (210,212,410,412) an einem Eingang des geschlossenen Förderkreises (230) positioniert ist.

5. Palettiersystem nach einem der vorhergehenden Ansprüche, ferner umfassend einen Etikettendrucker und einen Applikator, der in der Nähe von jedem des wenigstens einen Robotersystems (210, 212, 410, 412) stationiert ist, zum Drucken von Etiketten mit lebensmittelbezogenen Informationen und Anbringen der Etiketten an den Behältern vor dem Anordnen jedes Behälters an der bestimmten Palettenposition.

6. Palettiersystem nach einem der vorhergehenden Ansprüche, wobei das Durchsatzraten-Bestimmungsmittel betriebsfähig mit einem Aufnahmebereich des Palettiersystems verbunden ist, wobei der Aufnahmebereich (240) Gewichtsbestimmungsmittel zum Bestimmen des Gewichts einzelner ankommender Nahrungsmittelartikel oder Nahrungsmittelchargen vor dem Anordnen der Nahrungsmittelchargen in den Behältern umfasst, wobei das Durchsatzraten-Bestimmungsmittel einen Prozessor zum Verarbeiten der Gewichtsdaten vom Gewichtsbestimmungsmittel zum Bestimmen oder Schätzen der jeweiligen Durchsatzraten umfasst.

7. Palettiersystem nach einem der vorhergehenden Ansprüche, ferner umfassend ein Wiegemittel, das stromaufwärts in Bezug auf das Kennungs-Zugriffsmittel zum Wiegen der Behälter und der Vielzahl von Lebensmittelartikeln in den Behältern positioniert ist, wobei das Steuersystem ferner so konfiguriert ist, dass es die Wiegedaten beim Bestimmen der jeweiligen Durchsatzraten der Vielzahl von Behältertypen verwendet.

8. Palettiersystem nach einem der vorhergehenden Ansprüche, wobei das Steuerungssystem (231) dazu konfiguriert ist, dass das wenigstens eine Robotersystem beim Anordnen einer Vielzahl von Behältern, die ein oder mehrere gemeinsame Merkmale der in den Behältern enthaltenen Lebensmittel aufweisen, diese auf zwei oder mehr verschiedene Palettenpositionen steuert.

9. Verfahren zum Betreiben eines Palettiersystems, wobei das Palettiersystem wenigstens ein Robotersystem (210, 212, 410, 412), mehrere Palettenpositionen in der Nähe des wenigstens einen Robotersystems,
ein Steuersystem (231) und ein Fördermittel (205, 206, 230, 430) umfasst;
wobei das Verfahren umfasst:
- Speichern einer Liste von Behälterkennungen und in Bezug auf jede Behälterkennung einer Auftragszeilenkennung des Behälters im Steuersystem des Palettiersystems, wobei die Auftragszeilenkennung jedes jeweiligen Behälters eine Kundenbestellung definiert, welcher der Behälter innerhalb des Steuerungssystems (231) zugeordnet wird;
- Definieren einer Vielzahl von Behältertypen, wobei alle Behälter von jedem Typ von Behältern ein oder mehrere gemeinsame Merkmale der in den Behältern enthaltenen Lebensmittel aufweisen; wobei der Schritt des Definierens mittels des Steuersystems ausgeführt wird;
**dadurch gekennzeichnet, dass** das Verfahren ferner die folgenden Schritte umfasst:
- Bereitstellen eines Flusses von Behältern zu dem wenigstens einen Robotersystem an dem Fördermittel (205, 206, 230, 430), wobei jeder Behälter eine Vielzahl von Nahrungsmitteln enthält;
- Bestimmen jeweiliger Durchsatzraten der Vielzahl von Behältertypen auf dem Fördermittel; wobei die Durchsatzraten der Typen von Behältern an das Steuersystem übermittelt werden;
- Bestimmen der Behälterkennung jedes Behälters stromaufwärts des wenigstens einen Robotersystems; wobei die Behälterkennung jedes Behälters an das Steuersystem übermittelt wird; und nachfolgend:
- Bestimmen der jedem Behälter zugeordneten Auftragszeile auf der Grundlage der Liste von Behälterkennungen und zugeordneten Auftragszeilenkennungen, die in dem Steuersystem gespeichert sind; wobei der Schritt des Definierens mittels des Steuersystems ausgeführt; wird
- Bestimmen des Typs jedes Behälters und der zugehörigen Durchsatzrate dieses Behältertyps; wobei der Typ und die zugehörige Durchsatzrate an das Steuersystem (231) übermittelt werden;
- Bestimmen in dem Steuersystem einer einzigen der Palettenpositionen, der jeder der Behälter zuzuordnen ist, wobei eine Auswahl der Palettenposition für jeden Behälter unter der Vielzahl von Palettenpositionen auf der Grundlage der Auftragszeilenkennung des Behälters und der zugehörigen Durchsatzrate vorgenommen wird;
- Anordnen jedes Behälters an der bestimmten Palettenposition mittels des wenigstens einen Robotersystems (210, 212, 410, 412).

10. Verfahren nach Anspruch 9, wobei der Schritt des Bestimmens einer einzigen der Palettenpositionen der Vielzahl von Palettenpositionen eines bestimmten Robotersystems, das aus dem wenigstens einen Robotersystem (210, 212, 410, 412) ausgewählt ist, zugewiesen wird.

11. Verfahren nach Anspruch 9 oder 10, wobei vor der Bestimmung einer einzigen der Palettenpositionen, denen jeder der Behälter zuzuordnen ist, Informationen über die aktuell verfügbare Kapazität an der positionierten Palette bereitgestellt werden und wobei die Informationen über die aktuell verfügbare Kapazität als Eingabedaten bei der Bestimmung der einen einzigen der Palettenpositionen verwendet werden.

12. Verfahren nach einem der Ansprüche 9-11, ferner umfassend das Umleiten eines aus der Vielzahl von Behältern ausgewählten Behälters zur manuellen Handhabung.

## Revendications

1. Système de palettisation (200), comprenant :
• un stockage de palettes (220) pour loger une pluralité de palettes (213, 214, 413, 414) à des positions fixes,
• au moins un système robotisé (210-212 ; 410 ; 412) à proximité des positions fixes,
• des moyens de convoyage (205, 206, 230, 430) pour convoyer un flux de conteneurs vers le au moins un système robotisé (210- 212 ; 410 ; 412), chaque conteneur contenant une pluralité de denrées alimentaires ;
• un système de commande (231) ;
• des moyens pour stocker (232) dans le système de commande (231) du système de palettisation une liste d'identifiants de conteneurs et, pour chaque identifiant de conteneur, un identifiant de ligne de commande du conteneur, l'identifiant de ligne de commande de chaque conteneur respectif définissant une commande de client, à laquelle le conteneur est affecté dans le système de commande ;
• des moyens pour définir, dans le système de commande, une pluralité de types de conteneurs, dans lequel tous les conteneurs de chaque type de conteneurs partagent une ou plusieurs caractéristiques communes des denrées alimentaires contenues dans les conteneurs ;
• un moyen d'accès à l'identifiant (233) pour déterminer l'identifiant de conteneur de chaque conteneur en amont du au moins un système de robot,
le système de commande (231) étant en outre configuré pour déterminer à partir de la liste des identifiants de conteneurs et des identifiants de ligne de commande associés mémorisés dans le système de commande la ligne de commande associée à chaque conteneur ;
ordonner à au moins un système robotisé d'agencer chaque conteneur à la position de palette déterminée ;
**caractérisé en ce que** le système de palettisation (200) comprend en outre :
• un moyen de détermination de débit (231) pour déterminer les débits respectifs de la pluralité de types de conteneurs sur le moyen de convoyage,
et dans lequel le système de commande (231) est en outre configuré pour
o déterminer le type de chaque conteneur et le débit associé de ce type de conteneur ;
o déterminer une seule des positions de palettes auxquelles chacun des conteneurs doit être affecté, dans lequel une sélection de la position de palette pour chaque conteneur parmi la pluralité de positions de palettes est réalisée en fonction de l'identifiant de la ligne de commande du conteneur et du débit associé.

2. Système de palettisation selon la revendication 1, dans lequel les moyens de convoyage (205, 206, 230, 430) comprennent un convoyeur en boucle fermée (230) et où le au moins un système robotisé (210, 212, 410, 412) est positionné le long du convoyeur en boucle fermée, où le système de commande (231) est en outre configuré pour déterminer si ou non faire recirculer le conteneur sur le convoyeur en boucle fermée.

3. Système de palettisation selon la revendication 2, dans lequel le système de commande est en outre configuré pour utiliser des informations relatives à la capacité du au moins un système robotisé (210, 212, 410, 412) à déterminer les positions de palettes auxquelles chacun des conteneurs doit être affecté et utiliser le débit associé de ce type de conteneurs et la capacité d'au moins un système robotisé (210, 212, 410, 412) à déterminer s'il faut ou non faire recirculer le conteneur sur le convoyeur en boucle fermée (230).

4. Système de palettisation selon la revendication 2, dans lequel les moyens d'accès à l'identifiant (233) pour la détermination de l'identifiant de conteneur de chaque conteneur en amont du au moins un système robotisé (210, 212, 410, 412) est positionné à une entrée du convoyeur en boucle fermée (230).

5. Système de palettisation selon une quelconque des revendications précédentes, comprenant en outre une imprimante d'étiquette et un applicateur placés à proximité de chacun dudit au moins un système robotisé (210, 212, 410, 412) pour imprimer des étiquettes avec des informations relatives aux denrées alimentaires et fixer les étiquettes sur les conteneurs avant de disposer chaque conteneur à la position de palette déterminée

6. Système de palettisation selon une quelconque des revendications précédentes, dans lequel les moyens de détermination de débit sont fonctionnellement connectés à une zone de réception du système de palettisation, où la zone de réception (240) comprend des moyens de détermination de poids pour déterminer le poids des denrées alimentaires entrantes individuelles ou des lots de denrées alimentaires entrantes avant d'agencer les lots de denrées alimentaires dans les conteneurs, où les moyens de détermination de débit comprennent un processeur pour traiter les données de poids provenant des moyens de détermination de poids pour déterminer ou estimer les débits respectifs.

7. Système de palettisation selon une quelconque des revendications précédentes, comprenant en outre un moyen de pesée positionné en amont par rapport au moyen d'accès à l'identifiant pour peser les conteneurs et la pluralité d'articles alimentaires dans les conteneurs, où le système de commande est en outre configuré pour utiliser les données de pesée pour déterminer les débits respectifs de la pluralité de types de conteneurs.

8. Système de palettisation selon une quelconque des revendications précédentes, dans lequel le système de commande (231) est configuré pour commander le au moins un système robotisé en plaçant une pluralité de conteneurs partageant une ou plusieurs caractéristiques communes des denrées alimentaires contenues dans les conteneurs à deux ou plusieurs positions de palette différentes.

9. Procédé de fonctionnement d'un système de palettisation, le système de palettisation comprenant au moins un système robotisé (210, 212, 410, 412), une pluralité de positions de palettes à proximité dudit au moins un système robotisé, un système de commande (231) et un moyen de convoyage (205, 206, 230, 430) ;
le procédé comprenant de :
- stocker dans le système de commande du système de palettisation une liste d'identifiants de conteneurs et, pour chaque identifiant de conteneur, un identifiant de ligne de commande du conteneur, l'identifiant de ligne de commande de chaque conteneur respectif définissant une commande client, à laquelle le conteneur est affecté dans le système de commande (231) ;
- définir une pluralité de types de conteneurs, dans laquelle tous les conteneurs de chaque type de
conteneurs partagent une ou plusieurs caractéristiques communes des produits alimentaires contenus dans les conteneurs ; l'étape de définition étant réalisée au moyen du système de commande, **caractérisé en ce que** le procédé comprend en outre les étapes consistant à :
- fournir, au niveau des moyens de convoyage (205, 206, 230, 430), un flux de conteneurs à au moins un système robotisé, chaque conteneur contenant une pluralité de denrées alimentaires ;
- déterminer les débits respectifs de la pluralité de types de conteneurs sur les moyens de convoyage; les débits des types de conteneurs étant communiqués au système de commande ;
- déterminer l'identifiant de conteneur de chaque conteneur en amont du au moins un système robotisé ; l'identifiant de conteneur de chaque conteneur étant communiqué au système de commande et ensuite :
- déterminer sur la base de la liste des identifiants de conteneurs et des identifiants de ligne de commande associés stockés dans le système de commande la ligne de commande associée à chaque conteneur ; l'étape de définition étant réalisée au moyen du système de commande ;
- déterminer le type de chaque conteneur et le débit associé de ce type de conteneur ;
le type et le débit associé étant communiqués au système de commande (231) ;
- déterminer, dans le système de commande, une seule des positions de palettes auxquelles chacun des conteneurs doit être affecté, une sélection de la position de palette pour chaque conteneur parmi la pluralité de positions de palettes est faite sur la base de l'identifiant de la ligne de commande du conteneur et du débit associé,
- agencer chaque conteneur à la position de palette déterminée au moyen du au moins un système robotisé (210, 212, 410, 412).

10. Procédé selon la revendication 9, dans lequel l'étape de détermination d'un seule des positions de palettes est attribuée à une pluralité de positions de palette d'un système robotisé spécifique sélectionné parmi le au moins un système robotisé (210, 212, 410, 412).

11. Procédé selon la revendication 9 ou 10, dans lequel avant de déterminer une seule des positions de palette à laquelle chacun des conteneurs doit être attribué, des informations relatives à la capacité disponible actuelle au niveau de la palette positionnée sont fournies et où les informations de capacité disponible actuelle sont utilisées comme données d'entrée pour déterminer une position individuelle des positions de palette.

12. Procédé selon une quelconque des revendications 9 à 11, comprenant en outre le passage d'un conteneur sélectionné parmi la pluralité de conteneurs à une manipulation manuelle.
